# EUROPEAN PATENT SPECIFICATION

(11) **EP 4 438 647 B1**
(45) Date of publication and mention of the grant of the patent: **19.11.2025**
(21) Application number: 23164258.8
(22) Date of filing: 27.03.2023
(51) Int. Cl.: C08G 18/10, C08F 283/00, C09J 175/04, C08G 18/76, C08G 18/67, C08G 18/48, C08F 290/06, C09J 151/08

(54) **THE DUAL CURABLE ADHESIVE COMPOSITION**
DUAL HÄRTBARE HAFTZUSAMMENSETZUNG
COMPOSITION ADHÉSIVE À DOUBLE DURCISSEMENT

(43) Date of publication of application: 02.10.2024
(73) Proprietor: Henkel AG & Co. KGaA, 40589 Düsseldorf (DE)
(72) Inventor: SEO, Ys Yongseong, 08506 Seoul (KR); CHOI, Kuhn Sukhoon, 08291 Seoul (KR); PARK, Hyeongpil, 18111 Osan-si, Gyeonggi-do (KR); CHOI, Kwangho, 21425 Incheon (KR)

(56) References cited:
- US-A1- 2004 077 766
- US-A1- 2010 113 674
- US-A1- 2015 159 062

## Description

### FIELD OF THE INVENTION

The present invention is directed to a dual curable adhesive composition having an improved impact resistance at low temperatures (below 0 °C). The invention is set out in the appended set of claims.

### BACKGROUND TO THE INVENTION

There are many types of hand-held electronic devices currently on a market, which the users have with them all the time, and therefore, the devices are exposed to variable environments, including harsh winter conditions.

Ordinary adhesives used in the electronic devices and especially in the handheld devices generally show glass transition temperature (Tg) above room temperature, especially above 40°C. Further, the damping factor has a value less than 0.5 below 0°C. Therefore, the impact resistance of the adhesive drops at low temperatures. Low impact resistance at low temperatures causes electronic material parts to fall off when an impact is applied in a harsh winter conditions.

There has been attempts to improve the impact resistance at low temperatures by increasing the adhesion strength. However, as the adhesion increases, the modulus of the adhesive also increases, and, therefore, the impact resistance of the adhesive may actually decrease.

Another attempt to increase the impact resistance at low temperatures have been use resins and oligomers having higher molecular weights. Increased molecular weights have led to increase of the impact resistance at room temperature. However, the impact resistance has not increased at low temperatures by this method, because the adhesive has high Tg that is above room temperature. US 2004/077766 A discloses an adhesive composition with impact resistance at low temperature which contains a core shell polymer as impact modifier, monofunctional (meth)acrylate, urethane diacrylate and a free radical initiator.

Therefore, there is a need for an adhesive which has an increased impact resistance at low temperatures (below 0 °C)

### SUMMARY OF THE INVENTION

The present invention relates to a dual curable adhesive composition comprising a dual curable adhesive composition comprising a) a moisture curable polyurethane resin obtained by reacting diols with diisocyanates having a molecular weight of from 1000 to 1000000 Da; b) an urethane diacrylate oligomer having a molecular weight of from 1000 to 100000 Da c) a photoinitiator; d) two or more monofunctional (meth)acrylate monomers; and e) core shell particles, wherein the molecular weight is measured with gel permeation chromatography (GPC) using polystyrene calibration standards, such as is done according to ASTM 3536.

The present invention also relates to a cured dual curable adhesive composition according to the present invention, wherein the composition is first cured by light and followed by moisture or thermal cure.

The present invention encompasses use of the dual curable adhesive composition or the cured composition according to the present invention as an adhesive for a cover of a mobile telephone, TVs, laptops, automotives, aerospace, semiconductors, handheld devices or an adhesive for laminating a fabric or a film.

### DETAILED DESCRIPTION OF THE INVENTION

In the following passages the present invention is described in more detail.

In the context of the present invention, the terms used are to be construed in accordance with the following definitions, unless a context dictates otherwise.

As used herein, the singular forms "a", "an" and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps.

As used herein, the term *"consisting of'* excludes any element, ingredient, member or method step not specified.

The words *"preferred", "preferably", "desirably"* and *"particularly"* are used frequently herein to refer to embodiments of the disclosure that may afford particular benefits, under certain circumstances. However, the recitation of one or more preferable, preferred, desirable or particular embodiments does not imply that other embodiments are not useful and is not intended to exclude those other embodiments from the scope of the disclosure.

As used throughout this application, the word *"may"* is used in a permissive sense - that is meaning to have the potential to - rather than in the mandatory sense.

The recitation of numerical end points includes all numbers and fractions subsumed within the respective ranges, as well as the recited end points.

All percentages, parts, proportions and then like mentioned herein are based on weight unless otherwise indicated.

When an amount, a concentration or other values or parameters is/are expressed in form of a range, a preferable range, or a preferable upper limit value and a preferable lower limit value, it should be understood as that any ranges obtained by combining any upper limit or preferable value with any lower limit or preferable value are specifically disclosed, without considering whether the obtained ranges are clearly mentioned in the context.

Unless otherwise defined, all terms used in disclosing the invention, including technical and scientific terms, have the meaning as commonly understood by one of the ordinary skilled in the art to which this invention belongs to. By means of further guidance, term definitions are included to better appreciate the teaching of the present invention.

The present invention relates to a dual curable adhesive composition comprising a dual curable adhesive composition comprising a) a polyurethane resin having a molecular weight of from 1000 to 1000000 Da; b) an urethane diacrylate oligomer having a molecular weight of from 1000 to 100000 Da c) a photoinitiator; d) two or more monofunctional (meth)acrylate monomers; and e) core shell particles, wherein the molecular weight is measured with gel permeation chromatography (GPC) using polystyrene calibration standards, such as is done according to ASTM 3536.

The composition according to the present invention is light induced curing adhesive with additional curing through a moisture or thermal cure. The composition according to the present invention works like a pressure sensitive adhesive (PSA) when light irradiated, and subsequently can be cured in full by moisture or heat.

The composition according to the present invention has an increased impact resistance and has super shock absorbing behaviour at low temperatures (below 0°C).

The composition according to the present invention comprises a polyurethane resin. The polyurethane resin is moisture curable. The polyurethane resin has an impact to the viscosity of the adhesive composition and an impact to the impact resistance at low temperatures.

The curable polyurethane resin has a molecular weight of from 1000 to 1000000 Da, wherein the molecular weight is measured with gel permeation chromatography (GPC) using polystyrene calibration standards, such as is done according to ASTM 3536.

The above mentioned preferred molecular weight is preferred because lower than 1000 Da molecular weight may lead to reduced shock absorbing behaviour, wherein too high, more than 1000000 Da, may lead too high viscosity.

The polyurethane resin suitable for use in the present invention is obtained by reacting diols with diisocyanates to form isocyanate terminated polyurethane resin containing urethane groups and reactive isocyanate groups.

Suitable diols for use in the present invention are preferable selected from the group consisting of poly(tetramethylene ether) glycol (PTMG), polypropylene glycol (PPG), ester polyol and caprolactone type polyol.

Suitable commercially available diols for use in the present invention include but are not limited to PolyTHF 250 and PolyTHF 3000 from BASF.

Suitable isocyanates for use in the present invention are preferably selected from the group consisting of methylene diphenyl diisocyanate (MDI), toluene diisocyanate (TDI), isophorone diisocyanate (IPDI), hexamethylene diisocyanate (HDI), 2,4,4-trimethylhexamethylene diisocyanate (TMDI), H₁₂ methylene diphenyl diisocyanate (MDI) and mixtures thereof.

Suitable commercially available isocyanate for use in the present invention include but is not limited to Desmodur 44C fused from COVESTRO.

Suitable commercially available polyurethane resin for use in the present invention is available from Henkel Corporation.

The polyurethane resin may be present in a dual curable adhesive composition according to the present invention from 40 to 60% by weight by the total weight of the composition, preferably from 45 to 55% and more preferably from 47 to 58%.

These polyurethane resin quantities are preferred because when the polyurethane resin quantity is too high the viscosity of the composition may increase too much, whereas too low quantity may lead to decreased impact resistance in low temperatures (below 0 °C).

The composition according to the present invention comprises an urethane diacrylate oligomer.

The urethane diacrylate oligomer suitable for use in the present invention has a molecular weight of from 1000 to 100000 Da, wherein the molecular weight is measured with gel permeation chromatography (GPC) using polystyrene calibration standards, such as is done according to ASTM 3536.

The above mentioned preferred molecular weight is preferred because lower than 1000 Da molecular weight may lead to reduced shock absorbing behaviour, wherein too high, more than 100000 Da, may lead too high viscosity.

The urethane diacrylate oligomer is preferably selected from the group consisting of an aliphatic urethane di(meth)acrylate end capped oligomer, an aromatic urethane di(meth)acrylate oligomer, an aliphatic polyester-based urethane di(meth)acrylate oligomer, an aliphatic polyether-based urethane di(meth)acrylate oligomer and mixtures thereof, preferably the urethane diacrylate oligomer is an aliphatic urethane di(meth)acrylate end capped oligomer.

The aliphatic urethane di(meth)acrylate end capped oligomer is preferred because it is believed that it will improve the impact resistance at low temperatures (below 0 °C).

Suitable commercially available urethane di(meth)acrylate oligomers for use in the present invention include but are not limited to CN8891 NS and CN 8889 NS from Sartomer.

The urethane diacrylate oligomer may be present in the dual curable adhesive composition according to the present invention from 20 to 40% by weight by the total weight of the composition, preferably from 25 to 35% and more preferably from 27 to 33%.

These urethane diacrylate oligomer quantities are preferred because when the urethane diacrylate oligomer quantity is too high the viscosity of the composition may increase too much, whereas too low quantity may lead to decreased impact resistance at low temperatures (below 0 °C).

The composition according to the present invention comprises two or more monofunctional (meth)acrylate monomers.

The two or more monofunctional (meth)acrylate monomers may be an aliphatic, cycloaliphatic, cyclic or aromatic monofunctional (meth)acrylate monomer or mixtures thereof.

In a highly preferred embodiment, the two or more monofunctional (meth)acrylate monomers are a combination of aliphatic (meth)acrylate monomer and the cycloaliphatic (meth)acrylate monomer.

In another highly preferred embodiment, the ratio of the aliphatic (meth)acrylate monomer and the cycloaliphatic (meth)acrylate monomer is 1:2.

The combination of aliphatic (meth)acrylate monomer and the cycloaliphatic (meth)acrylate monomer in a ratio of 1:2 is preferred, because it enhances adhesion properties of the composition.

Preferably, the two or more monofunctional (meth)acrylate monomers are selected from the group consisting of tetrahydrofurfurylacrylate, tetrahydrofurfuryl methacrylate, isobornyl acrylate, isobornyl methacrylate, alkoxylated tetrahydrofurfuryl acrylate, alkoxylated tetrahydrofurfuryl methacrylate, cyclic trimethylolpropane formal acrylate, 2-phenoxyethyl acrylate, 2-phenoxyethyl methacrylate, ethoxylated (4) nonyl phenol acrylate, alkoxylated nonylphenol acrylate, alkoxylated phenol acrylate, 2-(2-ethoxyethoxy) ethylacrylate, 2-(2-ethoxyethoxy) ethylmethacrylate, alkoxylated lauryl acrylate, stearyl acrylate, stearyl methacrylate, lauryl acrylate, lauryl methacrylate, isodecyl acrylate, isodecyl methacrylate, isooctyl acrylate, isooctyl methacrylate, octyldecyl acrylate, octyldecyl methacrylate, tridecyl acrylate, tridecyl methacrylate, caprolactone acrylate, caprolactone methacrylate, methoxy polyethylene glycol (350) monoacrylate and methoxy polyethylene glycol (550) monoacrylate and mixtures thereof, preferably selected from the group consisting of tetrahydrofurfurylacrylate, tetrahydrofurfuryl methacrylate, 2-(2-ethoxyethoxy) ethylacrylate, 2-(2-ethoxyethoxy) ethylmethacrylate and mixtures thereof.

In a highly preferred embodiment, the two or more monofunctional (meth)acrylate monomers are tetrahydrofurfurylacrylate and 2-(2-ethoxyethoxy) ethylacrylate.

In another highly preferred embodiment, the two or more monofunctional (meth)acrylate monomers are tetrahydrofurfurylacrylate and 2-(2-ethoxyethoxy) ethylacrylate in a ratio of 1:2.

The combination of these specific (meth)acrylate monomers in a ratio of 1:2 is preferred, because it enhances adhesion properties of the composition.

Suitable commercially available (meth)acrylate monomers for use in the present invention include but are not limited to SR56 and SR285 NS from Sartomer.

The two or more monofunctional (meth)acrylate monomers may be present in a dual curable adhesive composition according to the present invention from 3 to 30% by weight by the total weight of the composition, preferably from 7 to 25% and more preferably from 10 to 20%.

These (meth)acrylate monomer quantities are preferred because too high quantity of the monofunctional (meth)acrylate monomer may lead to decrease the viscosity of the composition too much, whereas too low quantity may lead to decreased adhesion strength.

The composition according to the present invention comprises core shell particles. Core shell particles are biphasic materials which have an inner core structure and an outer shell made of different components. The core shell particles generally improve the shock absorbing performance of the composition at low temperatures.

The polymeric material of the core should have a glass transition temperature (T_{g}) of no greater than 0°C and preferably a glass transition temperature (T_{g}) of -20°C or lower, more preferably -40°C or lower and even more preferably from -20 to -60°C.

Low Tg value is believed to improve the impact resistance of the composition.

The polymer of the shell is non-elastomeric, thermoplastic or thermoset polymer having a glass transition temperature (T_{g}) of 50°C or lower, preferably 30°C or lower and more preferably room temperature or lower.

The glass transition temperature (Tg) is the onset temperature at which the cured resin changes from a glassy (solid) state to a soft, rubbery state: it can be considered the point at which a measurable reduction in physical properties occurs resulting from exposure to elevated temperatures. Glass transition temperature is measured according to ASTM D7028-07.

Without intention to limit the invention, the core may be comprised of: a diene homopolymer, for example, a homopolymer of butadiene or isoprene; a diene copolymer, for example a copolymer of butadiene or isoprene with one or more ethylenically unsaturated monomers, such as vinyl aromatic monomers, (meth)acrylonitrile or (meth)acrylates; polymers based on (meth)acrylic acid ester monomers, such as polybutylacrylate; and, polysiloxane elastomers such as polydimethylsiloxane and crosslinked polydimethylsiloxane.

Similarly, without intention to limit the present invention, the shell may be comprised of a polymer or copolymer of one or more monomers selected from: (meth)acrylates, such as methyl methacrylate; vinyl aromatic monomers, such as styrene; vinyl cyanides, such as acrylonitrile; unsaturated acids and anhydrides, such as acrylic acid; and, (meth)acrylamides. The polymer or copolymer used in the shell may possess acid groups that are cross-linked ionically through metal carboxylate formation, in particular through forming salts of divalent metal cations. The shell polymer or copolymer may also be covalently cross-linked by monomers having two or more double bonds per molecule.

Preferably, the core shell particles are selected from the group consisting of butadiene core shell particles, isoprene core shell particles, nitrile butadiene core shell particles, styrene butadiene core shell particles, styrene-butadiene-styrene core shell particles, styrene-ethylene-butadiene-styrene core shell particles, styrene-isobutadiene-styrene core shell particles and mixtures thereof.

Suitable core shell particles for use in the present invention have a particle size preferably from 2 to 500000 nm, preferably from 10 to 50000 nm, and more preferably from 15 to 5000 nm, and even more preferably from 100 to 5000 nm, wherein the particle size is measured according to ASTM E3340-22 Standard Guide for Development of Laser Diffraction Particle Size Analysis Methods for Powder Materials.

It is believed that the preferred core shell particle size range maximises the impact resistance performance of core shell particles in the composition according to the present invention.

The core shell particles may be present in a dual curable adhesive composition according to the present invention from 10 to 30% by weight by the total weight of the composition, preferably from 15 to 25% and more preferably from 17 to 23%.

These core shell particle quantities are preferred because too high quantity of the core shell particle may lead too high viscosity of the composition, whereas too low quantity may lead to decreased impact resistance at low temperatures (below 0 °C).

The composition according to the present invention comprises a photoinitiator. The photoinitiator acts to initiate the photopolymerization of chemically unsaturated oligomers in combination with mono- or multifunctional monomers.

Suitable photoinitiator for use in the present invention may be selected from the group consisting of hydroxyhexyl phenol ketone, 1-hydroxycyclohexyl phenyl ketone; benzophenone; 4-chlorobenzophenone; methyl 2-benzoylbenzoate; phenylbis(2,4,6-trimethylbenzoyl) phosphine oxide; diphenyl(2,4,6-trimethylbenzoyl) phosphine oxide; 4-phenylbenzophenone; 4-metylbenzophenone ; 2-methyl-1-[4-ethylthio) phenyl]-2-(4-morpholinyl)-1-propanone; 2-hydroxy-4'-(2-hydroxyethoxy)-2- methyl propiophenone; 2,4-diethyl thioxanthone; ethyl-4-(dimethylamino) benzoate; 4-(4'-methyl phenylthio)-benzophenone; 4,4'-bis(diethylamino)benzophenone; 4-benzoyl-4'-methyldiphenylsulfide; methyl phenylglyoxylate, methyl o-benzoylbenzoate, benzyldimethylketal, 2-ethylhexyl-4-dimethylaminobenzoate, ethyl-4-dimethylaminobenzoate, hydroxy-2-methylphen*yl-propane-1-one, 1-hydroxycyclohexylphenylketone, 2-isopropylthioxanthone, ethyl(2,4,6-trimethylbenzoyl) phenylphosphinate, 2-benzyl-2-(dimethylamino)-1-[4-(morpholinyl)phenyl]-1-butanone, 2-dimethylamino-2-(4-methyl-benzyl)-1-(4-morpholin-4-yl-phenyl)butan-1-one, and mixtures thereof, preferably the photoinitiator is 2-isopropylthioxanthone.

Suitable commercially available photoinitiators for use in the present invention include but is not limited to Irgacure 184 from Ciba Speciality Chemicals and ITX from Jiurichem.

The photoinitiator may be present in the composition from 1 to 10% by weight of the total weight of the composition, preferably from 2 to 9%, and more preferably from 3 to 7%.

The applicant has found out that these quantities are preferred because higher quantities than 10% may provide a tacky surface, whereas quantities lower than 1% may delay the cure.

The dual curable adhesive composition according to present invention is light curable and moisture or thermal curable.

The composition according to the present invention is first cured by light, preferably UV light to obtain PSA kind of adhesive. The composition is subsequently cured by moisture cure or thermal cure in full.

The thermal cure is preferably under temperature of 150°C.

The composition according to the present invention or the cured product can be used as an adhesive for a cover of a mobile telephone, TVs, laptops, automotives, aerospace, semiconductors, handheld devices or an adhesive for laminating a fabric or a film.

The adhesive composition according to the present invention can be applied to assembly electronic devices to prevented damage of the device when it is subjected to an impact or a shock or a frequent vibration at low temperatures (below 0°C).

### EXAMPLES

### Composition according to the present invention

Composition according to the present invention was prepared according to the ingredients and quantities presented in table 1. The composition of example 1 was prepared by placing polyurethane resin, aliphatic urethane diacrylate oligomer and monofunctional (meth)acrylate monomers into a reactor and mixed under a mechanical stirring for 2 hours at 40°C. Subsequently core shell particles were dispersed into the mixture over period of 60 minutes while the mixture was mechanically stirred at 40°C.

**Table 1**

| | wt.% |
|---|---|
| Polyurethane resin from Henkel Corporation | 48 |
| Aliphatic urethane diacrylate oligomer CN8891 NS from Sartomer. | 29 |
| Monofunctional (meth)acrylate monomer SR 256 from Sartomer | 9 |
| Monofunctional (meth)acrylate monomer SR285 NS from Sartomer | 4 |
| Photo initiator ITX from Jiurichem | 5 |
| Core shell particles from Henkel Corporation | 5 |

### Comparative example

Composition of comparative example was prepared according to the ingredients and quantities presented in table 2. The composition of comparative example was prepared by placing polyurethane resin, aliphatic urethane diacrylate oligomer and monofunctional (meth)acrylate monomers into a reactor and mixed under a mechanical stirring for 2 hours at 40°C.

**Table 2**

| | wt.% |
|---|---|
| Polyurethane resin from Henkel Corporation | 53 |
| Aliphatic urethane diacrylate oligomer CN8891 NS Sartomer. | 29 |
| Monofunctional (meth)acrylate monomer SR 256 from Sartomer | 9 |
| Monofunctional (meth)acrylate monomer SR285 NS from Sartomer | 4 |
| Photo initiator ITX from Jiurichem | 5 |
| Core shell particles from Henkel Corporation | 0 |

### Shock test at break

Compositions of example 1 and comparative example were coated on SUS 304 substrate. The sample was UV light irradiated. A glass substrate was placed on top of the adhesive on SUS 304 substrate. Subsequently the substrates were pressed for 30 seconds with pressure of 0.5 MPa. Finally, the samples were exposed to a moisture cure for 72 hours at 50RH%.

In the shock test at break, the samples were dropped on a metal ground from 1 meter height at -20 °C. The samples were dropped until they break, and the number of drops was counted. The results are listed in table 3.

**Table 3**

| | Composition according to the present invention | Composition of comparative example |
|---|---|---|
| Number of drops | >100 | 30 |

The test results indicate that the composition according to the present invention provides improved performance in shock test compared to comparative composition.

## Claims

1. A dual curable adhesive composition comprising
a) a moisture curable polyurethane resin obtained by reacting diols with diisocyanates having a molecular weight of from 1000 to 1000000 Da;
b) an urethane diacrylate oligomer having a molecular weight of from 1000 to 100000 Da
c) a photoinitiator;
d) two or more monofunctional (meth)acrylate monomers; and
e) core shell particles,
wherein the molecular weight is measured with gel permeation chromatography (GPC) using polystyrene calibration standards, such as is done according to ASTM 3536.

2. The dual curable adhesive composition according to claim 1, wherein said polyurethane resin is obtained by reacting diols with diisocyanates to form isocyanate terminated polyurethane resin containing urethane groups and reactive isocyanate groups, wherein suitable diols are preferable selected from the group consisting of poly(tetramethylene ether) glycol (PTMG), polypropylene glycol (PPG), ester polyol and caprolactone type polyol and wherein suitable isocyanates are preferably selected from the group consisting of methylene diphenyl diisocyanate (MDI), toluene diisocyanate (TDI) , isophorone diisocyanate (IPDI), hexamethylene diisocyanate (HDI) , 2,4,4-trimethylhexamethylene diisocyanate (TMDI), H₁₂ methylene diphenyl diisocyanate (MDI) and mixtures thereof.

3. The dual curable adhesive composition according to claim 1 or 2, wherein the polyurethane resin is present from 40 to 60% by weight by the total weight of the composition, preferably from 45 to 55% and more preferably from 47 to 58%.

4. The dual curable adhesive composition according to any of claims 1 to 3, wherein the urethane diacrylate oligomer is selected from the group consisting of an aliphatic urethane di(meth)acrylate endcapped oligomer, an aromatic urethane di(meth)acrylate oligomer, an aliphatic polyester based urethane di(meth)acrylate oligomer, an aliphatic polyether based urethane di(meth)acrylate oligomer and mixtures thereof, preferably the urethane diacrylate oligomer is an aliphatic urethane di(meth)acrylate end capped oligomer.

5. The dual curable adhesive composition according to any of claims 1 to 4, wherein the urethane diacrylate oligomer is present from 20 to 40% by weight by the total weight of the composition, preferably from 25 to 35% and more preferably from 27 to 33%.

6. The dual curable adhesive composition according to any of claims 1 to 5, wherein two or more monofunctional (meth)acrylate monomers are selected from the group consisting of tetrahydrofurfurylacrylate, tetrahydrofurfuryl methacrylate, isobornyl acrylate, isobornyl methacrylate, alkoxylated tetrahydrofurfuryl acrylate, alkoxylated tetrahydrofurfuryl methacrylate, cyclic trimethylolpropane formal acrylate, 2-phenoxyethyl acrylate, 2-phenoxyethyl methacrylate, ethoxylated (4) nonyl phenol acrylate, alkoxylated nonylphenol acrylate, alkoxylated phenol acrylate, 2-(2-ethoxyethoxy) ethylacrylate, 2-(2-ethoxyethoxy) ethylmethacrylate, alkoxylated lauryl acrylate, stearyl acrylate, stearyl methacrylate, lauryl acrylate, lauryl methacrylate, isodecyl acrylate, isodecyl methacrylate, isooctyl acrylate, isooctyl methacrylate, octyldecyl acrylate, octyldecyl methacrylate, tridecyl acrylate, tridecyl methacrylate, caprolactone acrylate, caprolactone methacrylate, methoxy polyethylene glycol (350) monoacrylate and methoxy polyethylene glycol (550) monoacrylate and mixtures thereof, preferably selected from the group consisting of tetrahydrofurfurylacrylate, tetrahydrofurfuryl methacrylate, 2-(2-ethoxyethoxy) ethylacrylate, 2-(2-ethoxyethoxy) ethylmethacrylate and mixtures thereof, more preferably two or more monofunctional (meth)acrylate monomers are tetrahydrofurfurylacrylate and 2-(2-ethoxyethoxy) ethylacrylate.

7. The dual curable adhesive composition according to any of claims 1 to 6, wherein two or more monofunctional (meth)acrylate monomers are combination of aliphatic (meth)acrylate monomer and the cyclic (meth)acrylate monomer.

8. The dual curable adhesive composition according to claim 7, wherein the ratio of the aliphatic (meth)acrylate monomer and the cyclic (meth)acrylate monomer is 1:2.

9. The dual curable adhesive composition according to any of claims 1 to 8, wherein two or more monofunctional (meth)acrylate monomers is present from 3 to 30% by weight by the total weight of the composition, preferably from 7 to 25% and more preferably from 10 to 20%.

10. The dual curable adhesive composition according to any of claims 1 to 9, wherein the core shell particles have a glass transition temperature (Tg) value less than 0 °C, wherein the glass transition temperature is measured according to ASTM D7028-07, and are preferably selected from the group consisting of butadiene core shell particles, isoprene core shell particles, nitrile butadiene core shell particles, styrene butadiene core shell particles, styrene-butadiene-styrene core shell particles, styrene-ethylene-butadiene-styrene core shell particles, styrene-isobutadiene-styrene core shell particles and mixtures thereof.

11. The dual curable adhesive composition according to any of claims 1 to 10, wherein the core shell particles have a particle size from 2 to 500000 nm, preferably from 10 to 50000 nm, and more preferably from 15 to 5000 nm, and even more preferably from 100 to 5000 nm, wherein the particle size is measured according to ASTM E3340-22 Standard Guide for Development of Laser Diffraction Particle Size Analysis Methods for Powder Materials.

12. The dual curable adhesive composition according to any of claims 1 to 11, wherein the core shell particles are present from 10 to 30% by weight by the total weight of the composition, preferably from 15 to 25% and more preferably from 17 to 23%.

13. The dual curable adhesive composition according to any of claims 1 to 12, wherein the composition is light curable and moisture or thermal curable.

14. The cured dual adhesive curable composition according to any of claims 1 to 13, wherein the composition is first cured by light and followed by moisture or thermal cure.

15. Use of the dual adhesive curable composition according to any of claims 1 to 12 or the cured composition according to claim 14 as an adhesive for a cover of a mobile telephone, TVs, laptops, automotives, aerospace, semiconductors, handheld devices or an adhesive for laminating a fabric or a film.

## Patentansprüche

1. Dual härtbare Klebstoffzusammensetzung, umfassend
a) ein feuchtigkeitshärtbares Polyurethanharz, das durch ein Reagieren von Diolen mit Diisocyanaten, die ein Molekulargewicht von 1.000 bis 1.000.000 Da aufweisen, erhalten wird;
b) ein Urethandiacrylatoligomer, das ein Molekulargewicht von 1.000 bis 100.000 Da aufweist
c) einen Photoinitiator;
d) zwei oder mehr monofunktionelle (Meth)acrylatmonomere; und
e) Kern-Schale-Partikel,
wobei das Molekulargewicht mit Gelpermeationschromatographie (GPC) unter Verwendung von Polystyrol-Kalibrierstandards gemessen wird, wie gemäß ASTM 3536 durchgeführt wird.

2. Dual härtbare Klebstoffzusammensetzung nach Anspruch 1, wobei das Polyurethanharz durch das Reagieren von Diolen mit Diisocyanaten erhalten wird, um ein Isocyanat-endständiges Polyurethanharz auszubilden, das Urethangruppen und reaktive Isocyanatgruppen enthält, wobei geeignete Diole vorzugsweise aus der Gruppe ausgewählt werden, bestehend aus Poly(tetramethylenether)glykol (PTMG), Polypropylenglykol (PPG), Esterpolyol und Polyol vom Caprolactontyp, und wobei geeignete Isocyanate vorzugsweise aus der Gruppe ausgewählt werden, bestehend aus Methylendiphenyldiisocyanat (MDI), Toluoldiisocyanat (TDI), Isophorondiisocyanat (IPDI), Hexamethylendiisocyanat (HDI), 2,4,4-Trimethylhexamethylendiisocyanat (TMDI), H₁₂-Methylendiphenyldiisocyanat (MDI) und Gemischen davon.

3. Dual härtbare Klebstoffzusammensetzung nach Anspruch 1 oder 2, wobei das Polyurethanharz in von 40 bis 60 Gew.-% des Gesamtgewichts der Zusammensetzung, vorzugsweise von 45 bis 55 % und stärker bevorzugt von 47 bis 58 % vorhanden ist.

4. Dual härtbare Klebstoffzusammensetzung nach einem der Ansprüche 1 bis 3, wobei das Urethandiacrylatoligomer aus der Gruppe ausgewählt ist, bestehend aus einem aliphatischen endverschlossenen Urethandi(meth)acrylatoligomer, einem aromatischen Urethandi(meth)acrylatoligomer, einem Urethandi(meth)acrylatoligomer auf Basis eines aliphatischen Polyesters, einem Urethandi(meth)acrylatoligomer auf Basis eines aliphatischen Polyethers und Gemischen davon, vorzugsweise wobei das Urethandiacrylatoligomer ein aliphatisches endverschlossenes Urethandi(meth)acrylatoligomer ist.

5. Dual härtbare Klebstoffzusammensetzung nach einem der Ansprüche 1 bis 4, wobei das Urethandiacrylatoligomer in von 20 bis 40 Gew.-% des Gesamtgewichts der Zusammensetzung, vorzugsweise von 25 bis 35 Gew.-% und stärker bevorzugt von 27 bis 33 Gew.-% vorhanden ist.

6. Dual härtbare Klebstoffzusammensetzung nach einem der Ansprüche 1 bis 5, wobei zwei oder mehr monofunktionelle (Meth)acrylatmonomere aus der Gruppe ausgewählt sind, bestehend aus Tetrahydrofurfurylacrylat, Tetrahydrofurfurylmethacrylat, Isobornylacrylat, Isobornylmethacrylat, alkoxyliertem Tetrahydrofurfurylacrylat, alkoxyliertem Tetrahydrofurfurylmethacrylat, cyclischem Trimethylolpropanformalacrylat, 2-Phenoxyethylacrylat, 2-Phenoxyethylmethacrylat, ethoxyliertem (4)-Nonylphenolacrylat, alkoxyliertem Nonylphenolacrylat, alkoxyliertem Phenolacrylat, 2-(2-Ethoxyethoxy)ethylacrylat, 2-(2-Ethoxyethoxy)ethylmethacrylat, alkoxyliertem Laurylacrylat, Stearylacrylat, Stearylmethacrylat, Laurylacrylat, Laurylmethacrylat, Isodecylacrylat, Isodecylmethacrylat, Isooctylacrylat, Isooctylmethacrylat, Octyldecylacrylat, Octyldecylmethacrylat, Tridecylacrylat, Tridecylmethacrylat, Caprolactonacrylat, Caprolactonmethacrylat, Methoxypolyethylenglykol(350)-monoacrylat und Methoxypolyethylenglykol(550)-monoacrylat und Gemischen davon, vorzugsweise aus der Gruppe ausgewählt ist, bestehend aus Tetrahydrofurfurylacrylat, Tetrahydrofurfurylmethacrylat, 2-(2-Ethoxyethoxy)ethylacrylat, 2-(2-Ethoxyethoxy)ethylmethacrylat und Gemischen davon, stärker bevorzugt zwei oder mehr monofunktionelle (Meth)acrylatmonomere Tetrahydrofurfurylacrylat und 2-(2-Ethoxyethoxy)ethylacrylat sind.

7. Dual härtbare Klebstoffzusammensetzung nach einem der Ansprüche 1 bis 6, wobei zwei oder mehr monofunktionelle (Meth)acrylatmonomere eine Kombination aus aliphatischem (Meth)acrylatmonomer und cyclischem (Meth)acrylatmonomer sind.

8. Dual härtbare Klebstoffzusammensetzung nach Anspruch 7, wobei das Verhältnis des aliphatischen (Meth)acrylatmonomers und des cyclischen (Meth)acrylatmonomers 1 : 2 beträgt.

9. Dual härtbare Klebstoffzusammensetzung nach einem der Ansprüche 1 bis 8, wobei zwei oder mehr monofunktionelle (Meth)acrylatmonomere in von 3 bis 30 Gew.-% des Gesamtgewichts der Zusammensetzung, vorzugsweise von 7 bis 25 Gew.-% und stärker bevorzugt von 10 bis 20 Gew.-% vorhanden sind.

10. Dual härtbare Klebstoffzusammensetzung nach einem der Ansprüche 1 bis 9, wobei die Kern-Schale-Partikel eine Glasübergangstemperatur (Tg) von weniger als 0 °C aufweisen, wobei die Glasübergangstemperatur gemäß ASTM D7028-07 gemessen wird, und vorzugsweise aus der Gruppe ausgewählt sind, bestehend aus Butadien-Kern-Schale-Partikeln, Isopren-Kern-Schale-Partikeln, Nitrilbutadien-Kern-Schale-Partikeln, Styrol-Butadien-Styrol-Kern-Schale-Partikeln, Styrol-Ethylen-Butadien-Styrol-Kern-Schale-Partikeln, Styrol-Isobutadien-Styrol-Kern-Schale-Partikeln und Gemischen davon.

11. Dual härtbare Klebstoffzusammensetzung nach einem der Ansprüche 1 bis 10, wobei die Kern-Schale-Partikel eine Partikelgröße von 2 bis 500.000 nm, vorzugsweise von 10 bis 50.000 nm und stärker bevorzugt von 15 bis 5.000 nm und noch stärker bevorzugt von 100 bis 5.000 nm aufweisen, wobei die Partikelgröße gemäß ASTM E3340-22 Standard Guide for Development of Laser Diffraction Particle Size Analysis Methods for Powder Materials gemessen wird.

12. Dual härtbare Zusammensetzung nach einem der Ansprüche 1 bis 11, wobei die Kern-Schale-Partikel in von 10 bis 30 Gew.-% des Gesamtgewichts der Zusammensetzung, vorzugsweise von 15 bis 25 Gew.-% und stärker bevorzugt von 17 bis 23 Gew.-% vorhanden sind.

13. Dual härtbare Klebstoffzusammensetzung nach einem der Ansprüche 1 bis 12, wobei die Zusammensetzung lichthärtbar und feuchtigkeits- oder wärmehärtbar ist.

14. Gehärtete, duale Klebstoffzusammensetzung nach einem der Ansprüche 1 bis 13, wobei die Zusammensetzung zuerst durch Licht und anschließend durch Feuchtigkeit oder Wärmehärtung gehärtet wird.

15. Verwendung der dual härtbaren Klebstoffzusammensetzung nach einem der Ansprüche 1 bis 12 oder der gehärteten Zusammensetzung nach Anspruch 14 als ein Klebstoff für eine Hülle eines Mobiltelefons, Fernsehapparate, Laptops, Kraftfahrzeuge, Luft- und Raumfahrt, Halbleiter, handgehaltene Vorrichtungen oder einen Klebstoff zum Laminieren eines Gewebes oder einer Folie.

## Revendications

1. Composition adhésive à double durcissement comprenant
a) une résine de polyuréthane durcissable à l'humidité obtenue par réaction de diols avec des diisocyanates ayant une masse moléculaire allant de 1 000 à 1 000 000 Da ;
b) un oligomère d'uréthane diacrylate ayant une masse moléculaire allant de 1 000 à 100 000 Da
c) un photo-initiateur ;
d) deux monomères (méth)acrylate monofonctionnels ou plus ; et
e) des particules cœur-écorce,
dans laquelle la masse moléculaire est mesurée par chromatographie par perméation de gel (GPC) à l'aide de standards d'étalonnage de polystyrène, comme le prévoit la norme ASTM 3536.

2. Composition adhésive à double durcissement selon la revendication 1, dans laquelle ladite résine de polyuréthane est obtenue par réaction de diols avec des diisocyanates pour former une résine de polyuréthane à terminaison isocyanate contenant des groupes uréthane et des groupes isocyanate réactifs, dans laquelle les diols appropriés sont de préférence choisis dans le groupe constitué de poly(tétraméthylène éther) glycol (PTMG), polypropylène glycol (PPG), polyol ester et polyol de type caprolactone et dans laquelle les diols appropriés sont de préférence choisis dans le groupe constitué de diisocyanate de méthylène diphényle (MDI), diisocyanate de toluène (TDI), diisocyanate d'isophorone (IPDI), diisocyanate d'hexaméthylène (HDI), diisocyanate de 2,4,4-triméthylhexaméthylène (TMDI), diisocyanate de méthylène diphényle H₁₂ (MDI) et mélanges de ceux-ci.

3. Composition adhésive à double durcissement selon la revendication 1 ou 2, dans laquelle la résine de polyuréthane est présente à raison de 40 à 60 % en poids du poids total de la composition, de préférence de 45 à 55 %, et plus préférablement de 47 à 58 %.

4. Composition adhésive à double durcissement selon l'une quelconque des revendications 1 à 3, dans laquelle l'oligomère d'uréthane diacrylate est choisi dans le groupe constitué d'un oligomère uréthane di(méth)acrylate aliphatique à extrémité coiffée, d'un oligomère uréthane di(méth)acrylate aromatique, d'un oligomère uréthane di(méth)acrylate à base de polyester aliphatique, d'un oligomère uréthane di(méth)acrylate à base de polyéther aliphatique et de mélanges de ceux-ci, de préférence l'oligomère uréthane diacrylate est un oligomère uréthane di(méth)acrylate aliphatique à extrémité coiffée.

5. Composition adhésive à double durcissement selon l'une quelconque des revendications 1 à 4, dans laquelle l'oligomère uréthane diacrylate est présent à raison de 20 à 40 % en poids du poids total de la composition, de préférence de 25 à 35 % et plus préférablement de 27 à 33 %.

6. Composition adhésive à double durcissement selon l'une quelconque des revendications 1 à 5, dans laquelle deux monomères (méth)acrylate monofonctionnels ou plus sont choisis dans le groupe constitué d'acrylate de tétrahydrofurfuryle, méthacrylate de tétrahydrofurfuryle, acrylate d'isobornyle, méthacrylate d'isobornyle, acrylate de tétrahydrofurfuryle alcoxylé, méthacrylate de tétrahydrofurfuryle alcoxylé, acrylate de formaldéhyde de triméthylolpropane cyclique, acrylate de 2-phénoxyéthyle, méthacrylate de 2-phénoxyéthyle, acrylate de nonylphénol éthoxylé (4), acrylate de nonylphénol alcoxylé, acrylate de phénol alcoxylé, acrylate de 2-(2-éthoxyéthoxy)éthyle, méthacrylate de 2-(2-éthoxyéthoxy)éthyle, acrylate de lauryle alcoxylé, acrylate de stéaryle, méthacrylate de stéaryle, acrylate de lauryle, méthacrylate de lauryle, acrylate d'isodécyle, méthacrylate d'isodécyle, acrylate d'isooctyle, méthacrylate d'isooctyle, acrylate d'octyldécyle, méthacrylate d'octyldécyle, acrylate de tridécyle, méthacrylate de tridécyle, acrylate de caprolactone, méthacrylate de caprolactone, monoacrylate de méthoxy polyéthylène glycol (350) et méthoxy polyéthylène glycol (550) et mélanges de ceux-ci, de préférence choisis dans le groupe constitué d'acrylate de tétrahydrofurfuryle, méthacrylate de tétrahydrofurfuryle, acrylate de 2-(2-éthoxyéthoxy)éthyle, méthacrylate de 2-(2-éthoxyéthoxy)éthyle et mélanges de ceux-ci, plus préférablement deux monomères (méth)acrylate monofonctionnels ou plus sont l'acrylate de tétrahydrofurfuryle et l'acrylate de 2-(2-éthoxyéthoxy)éthyle.

7. Composition adhésive à double durcissement selon l'une quelconque des revendications 1 à 6, dans laquelle deux monomères (méth)acrylate monofonctionnels ou plus sont une combinaison de monomère (méth)acrylate aliphatique et du monomère (méth)acrylate cyclique.

8. Composition adhésive à double durcissement selon la revendication 7, dans laquelle le rapport entre le monomère (méth)acrylate aliphatique et le monomère (méth)acrylate cyclique est de 1:2.

9. Composition adhésive à double durcissement selon l'une quelconque des revendications 1 à 8, dans laquelle deux monomères (méth)acrylate monofonctionnels ou plus sont présents à raison de 3 à 30 % en poids du poids total de la composition, de préférence de 7 à 25 % et plus préférablement de 10 à 20 %.

10. Composition adhésive à double durcissement selon l'une quelconque des revendications 1 à 9, dans laquelle les particules cœur-écorce ont une valeur de température de transition vitreuse (Tg) inférieure à 0 °C, dans laquelle la température de transition vitreuse est mesurée selon la norme ASTM D7028-07, et sont de préférence choisies dans le groupe constitué de particules cœur-écorce de butadiène, particules cœur-écorce d'isoprène, particules cœur-écorce de nitrile-butadiène, particules cœur-écorce de styrène-butadiène, particules cœur-écorce de styrène-butadiène-styrène, particules cœur-écorce de styrène-éthylène-butadiène-styrène, particules cœur-écorce de styrène-isobutadiène-styrène et mélanges de celles-ci.

11. Composition adhésive à double durcissement selon l'une quelconque des revendications 1 à 10, dans laquelle les particules cœur-écorce ont une taille de particule allant de 2 à 500 000 nm, de préférence de 10 à 50 000 nm, et plus préférablement de 15 à 5 000 nm, et encore plus préférablement de 100 à 5 000 nm, dans laquelle la taille de particule est mesurée conformément à la norme ASTM E3340-22 Guide standard pour le développement de méthodes d'analyse granulométrique par diffraction laser pour les matériaux en poudre (Standard Guide for Development of Laser Diffraction Particle Size Analysis Methods for Powder Materials).

12. Composition adhésive à double durcissement selon l'une quelconque des revendications 1 à 11, dans laquelle les particules cœur-écorce sont présentes à raison de 10 à 30 % en poids du poids total de la composition, de préférence de 15 à 25 %, et plus préférablement de 17 à 23 %.

13. Composition adhésive à double durcissement selon l'une quelconque des revendications 1 à 12, dans laquelle la composition est durcissable à la lumière et durcissable à l'humidité ou à la chaleur.

14. Composition adhésive à double durcissement selon l'une quelconque des revendications 1 à 13, dans laquelle la composition est d'abord durcie par la lumière, en faisant suivre par un durcissement à l'humidité ou à la chaleur.

15. Utilisation de la composition adhésive à double durcissement selon l'une quelconque des revendications 1 à 12 ou de la composition durcie selon la revendication 14 comme adhésif pour une coque d'un téléphone mobile, des téléviseurs, des ordinateurs portables, des automobiles, dans l'aérospatiale, des semi-conducteurs, des appareils portatifs ou comme adhésif pour le laminage d'un tissu ou d'un film.
